# FASCICULE DE BREVET EUROPEEN

(11) **EP 3 519 760 B1**
(45) Date de publication et mention de la délivrance du brevet: **11.11.2020**
(21) Numéro de dépôt: 17780485.3
(22) Date de dépôt: 18.09.2017
(51) Int. Cl.: F41J 5/06

(54) **DISPOSITIF DE LOCALISATION D'UN IMPACT CONTRE UNE SURFACE INTERACTIVE, INSTALLATIONS, PROCEDE ET PROGRAMME D'ORDINATEUR CORRESPONDANTS**
VORRICHTUNG ZUR ORTUNG EINES AUFPRALLS GEGEN EINE INTERAKTIVE OBERFLÄCHE, ENTSPRECHENDE VORRICHTUNG, VERFAHREN UND COMPUTERPROGRAMM
DEVICE FOR LOCATING AN IMPACT AGAINST AN INTERACTIVE SURFACE, CORRESPONDING EQUIPMENT, METHOD AND COMPUTER PROGRAM

(30) Priorité: 27.09.2016 FR 1659133
(43) Date de publication de la demande: 07.08.2019
(73) Titulaire: Commissariat à l'Énergie Atomique et aux Énergies Alternatives, 75015 Paris (FR)
(72) Inventeur: ALEXANDRE, Jean-Marc, 91370 Verrières-le-Buisson (FR); BODEN, Robert, 91410 Dourdan (FR)
(74) Mandataire: Bonnet, Michel
(86) Numéro de dépôt international: PCT/FR2017/052483
(87) Numéro de publication internationale: WO 2018/060564

(56) Documents cités:
- WO-A2-2012/104767
- AU-B2- 436 959
- DE-A1- 2 738 213

## Description

La présente invention concerne un dispositif de localisation d'un impact contre une surface interactive, par une analyse de différences de temps de propagation d'ondes mécaniques progressives se propageant à partir de l'impact. Elle concerne également des installations comportant ce dispositif, un procédé le mettant en oeuvre et un programme d'ordinateur correspondant.

On connaît de nombreux objets à surface interactive, notamment des dispositifs d'affichages, des téléphones mobiles ou autres dispositifs portables d'assistance numérique personnelle. Leur interface est en général un écran plat et rectangulaire avec lequel un utilisateur peut interagir à l'aide d'un projectile, d'un stylet ou même d'un doigt. On notera cependant que l'invention s'applique plus généralement à tout type d'objet présentant une surface interactive apte à faire propager des ondes mécaniques progressives à partir d'un impact, cette surface n'étant pas nécessairement plane, ni de contour rectangulaire.

Par surface interactive, on entend une surface bidimensionnelle ou tridimensionnelle, capable de changer de forme au sens de l'élasticité statique et dynamique des matériaux lorsqu'elle est soumise à un impact tel qu'un toucher, une force de contact, une impulsion mécanique ou encore un choc, en permettant ainsi la propagation d'ondes mécaniques progressives détectables à l'aide de transducteurs, notamment des ondes acoustiques de surface, à partir du lieu de l'impact. La déformation de surface peut être submillimétrique non perceptible à l'œil nu. Des surfaces en plastique, verre ou métal conviennent.

Chacun des objets à surface interactive connus comporte un dispositif de localisation d'impacts à l'aide d'une ou plusieurs techniques de détection. Une tendance forte à la réduction du coût de fabrication et à la réduction de l'encombrement vise à ne retenir que les technologies les plus simples utilisant un nombre limité de capteurs. L'invention concerne ainsi plus précisément un dispositif de localisation mettant en oeuvre une technologie de détection de la propagation d'ondes mécaniques progressives dans une surface interactive, notamment à l'aide de détecteurs de type transducteurs piézoélectriques.

Une première solution est divulguée dans le brevet US 7,345,677 B2. Elle est basée sur une reconnaissance de la position d'un impact par apprentissage. Le procédé mis en oeuvre opère une corrélation croisée entre au moins un signal acoustique mesuré issu de la détection d'une onde acoustique engendrée par un impact sur la surface interactive de l'objet et un ensemble de référence dit « ensemble de signatures » constitué de réponses acoustiques impulsionnelles préenregistrées, chacune étant relative à une position prédéfinie que l'on souhaite associer à une fonction et reconnaître lorsqu'un impact est porté sur cette position.

Une deuxième solution, par exemple divulguée dans le brevet US 8,330,744 B2, consiste à mesurer la perturbation d'un impact sur la propagation d'ondes mécaniques progressives émises régulièrement dans la surface interactive indépendamment de cet impact. Cette solution est réputée plus précise et fiable que la précédente, notamment pour qualifier ou suivre l'impact, mais elle est également basée sur une reconnaissance de la position d'un impact par apprentissage.

Ces deux premières solutions présentent l'inconvénient de dépendre de cet apprentissage qui peut être à la fois complexe à mettre en oeuvre et rapidement inexploitable en cas de variations du milieu ou de la surface interactive. Elles nécessitent en outre des puissances de calcul assez importantes.

Une troisième solution, plus ancienne, est basée sur la mesure d'une différence de temps de transit d'un paquet d'ondes engendré par un impact vers une pluralité de détecteurs piézoélectriques et sur le calcul déterministe, à l'aide d'une formule mathématique préétablie, de la position d'une source émettrice du paquet d'ondes. Ainsi, cette solution nécessite un dispositif de localisation d'impact comportant :
- au moins trois transducteurs disposés et répartis contre la surface interactive, conçus pour capter les ondes mécaniques progressives se propageant dans la surface interactive et les transformer en signaux électriques, et
- une unité centrale électronique, reliée aux transducteurs pour recevoir leurs signaux électriques, programmée pour localiser l'impact dans la surface interactive par une analyse de différences de temps de propagation des ondes mécaniques progressives issues de l'impact vers les transducteurs sur la base d'instants de détection de l'impact identifiés dans les signaux électriques reçus.

D'une façon générale, il est ainsi possible de localiser un impact de doigt ou d'objet ponctuel (par exemple un projectile ou un stylet), puisque celui-ci est alors émetteur d'une impulsion. Mais avec cette technologie assez ancienne, pourtant avantageusement simple, il est difficile d'atteindre une bonne précision de localisation, notamment au-delà de certaines dimensions de la surface interactive ou lorsque l'impact est de faible intensité, parce qu'il est alors délicat d'identifier précisément les instants de détection d'impact dans les signaux électriques transmis à l'unité centrale électronique.

Par exemple, si la méthode d'identification des instants de détection d'impact est basée sur le dépassement d'un seuil prédéterminé dans les signaux retournés par les transducteurs, cela engendre une erreur de mesure à partir du moment où les signaux retournés ne sont pas de mêmes amplitudes, ce qui est inévitable compte tenu de l'atténuation généralement forte des ondes progressives et des distances différente entre l'impact et les différents transducteurs. L'instant de détection d'impact sera retardé dans les signaux les plus atténués retournés par les transducteurs les plus éloignés de l'impact. Par ailleurs, le seuil prédéterminé est obligatoirement commun à tous les transducteurs puisqu'aucune hypothèse ne peut être faite a priori sur la localisation d'un impact et donc sur les amplitudes respectives des signaux retournés. Il est généralement choisi à quelques dizaines de millivolts pour éviter toute fausse détection sur du bruit ambiant.

Concrètement, pour une surface interactive en acier, la pente du signal montant des ondes est de l'ordre de 80 mV/µs. Si la différence d'amplitude entre deux signaux de deux transducteurs est d'un facteur deux (le premier présentant une pente montante à 80 mV/µs), il en résulte, pour un seuil de déclenchement à 20 mV, une erreur d'environ 250 ns. Les ondes se propageant à une vitesse de 5500 m/s, cela donne une erreur de localisation voisine de 1,5 mm.

Dans la pratique, pour atténuer l'erreur de localisation, une préamplification large bande, une élévation au carré, une détection de crête, une intégration (à l'aide d'une forte résistance en sortie de transducteur) et une amplification fréquentiellement sélective peuvent être réalisées en sortie des transducteurs, comme par exemple enseigné dans le brevet US 6,933,930 B2. Il en résulte une plus forte amplitude des signaux retournés et une meilleure adaptation au traitement ultérieur dans le cas d'une détection basée sur l'obtention d'un seuil d'énergie. Mais des erreurs de mesures importantes subsistent lorsque l'impact est proche de la périphérie dont les transducteurs forment les sommets parce que les différences d'amplitudes entre signaux sont importantes et les temps d'intégration diffèrent. US 6,933,930 B2 enseigne donc de corriger ces temps d'intégration en tentant de les évaluer pour les soustraire des instants de détection. Mais le traitement résultant, nécessitant notamment une conversion analogique/numérique est assez complexe et peu robuste.

Le brevet US 6,367,800 B1 propose une amplification suivie d'un étage résonateur centré sur 25 kHz, permettant d'amplifier le signal sur une fréquence donnée. Cette méthode qui peut être très précise n'est cependant pas robuste. Le choix d'une fréquence de résonance rend le système sensible aux variations de profil fréquentiel du signal qui peut varier selon l'énergie de l'impact, sa direction et la nature de l'objet à l'origine de l'impact.

Quant aux méthodes consistant à numériser les signaux en sortie des transducteurs, comme par exemple enseigné dans le brevet US 7,088,347 B2, avant tout traitement et éventuelle normalisation, le problème est qu'elles nécessitent des fréquences de conversion analogique/numérique et des capacités en mémoire et calcul très élevées compte tenu de la célérité des ondes mécaniques progressives dans la surface interactive.

DE 2738213 A1 est également un document d'art antérieur pertinent.

Il peut ainsi être souhaité de concevoir un dispositif de localisation d'impact qui permette de s'affranchir d'au moins une partie des problèmes et contraintes précités.

Il est donc proposé un dispositif de localisation d'un impact contre une surface interactive apte à faire propager des ondes mécaniques progressives à partir de l'impact, comportant :
- au moins trois transducteurs disposés et répartis contre la surface interactive, conçus pour capter les ondes mécaniques progressives se propageant dans la surface interactive et les transformer en signaux électriques, et
- une unité centrale électronique, reliée aux transducteurs pour recevoir leurs signaux électriques, programmée pour localiser l'impact dans la surface interactive par une analyse de différences de temps de propagation des ondes mécaniques progressives issues de l'impact vers les transducteurs sur la base d'instants de détection de l'impact identifiés dans les signaux électriques reçus,
dans lequel l'unité centrale électronique est programmée pour :
- déclencher une détection d'impact à partir d'un premier instant où au moins une dérivée M-ième d'au moins l'un des signaux électriques reçus dépasse une valeur seuil prédéterminée non nulle, où M est un nombre entier positif ou nul, et
- après déclenchement de la détection d'impact :
   - déterminer, pour chaque signal électrique reçu de chaque transducteur, au moins un deuxième instant, postérieur au premier instant, de premier passage à zéro d'au moins une dérivée N-ième de ce signal électrique, où N est un nombre entier positif ou nul, et
   - identifier, pour chaque signal électrique reçu de chaque transducteur, au moins un instant de détection d'impact dans ce signal électrique à partir dudit au moins un deuxième instant déterminé.

Il a en effet été constaté que, de façon surprenante, alors que les pentes ascendantes des signaux retournés par les transducteurs sont très dépendantes des distances entre l'impact et les transducteurs, ce n'est pas le cas ensuite des premiers passages à zéros des signaux, ou de leurs dérivées successives, lorsqu'ils ont dépassé la valeur seuil prédéterminée. Ainsi, en procédant en deux étapes simples comme enseigné ci-dessus, l'instant de détection d'impact peut être identifié de façon robuste dans les signaux retournés par les transducteurs. On notera par ailleurs que le dépassement d'une valeur seuil et la détection d'un passage à zéro peuvent être réalisés sur des signaux analogiques, de sorte que la mise en oeuvre de la présente invention ne nécessite pas de conversion analogique/numérique.

De façon optionnelle, chaque transducteur est un capteur piézoélectrique présentant une capacité et une charge de sortie montée en parallèle telles que :
- la charge de sortie est purement résistive et son impédance est inférieure au dixième de l'impédance de la capacité à une fréquence moyenne des ondes mécaniques progressives issues de l'impact, ou
- la charge de sortie comporte un amplificateur opérationnel monté en convertisseur de courant à tension.

De façon optionnelle également, l'unité centrale électronique est programmée pour déclencher la détection d'impact en mémorisant des valeurs échantillonnées d'au moins un signal issu d'au moins un comparateur à zéro de ladite au moins une dérivée N-ième de chaque signal électrique reçu de chaque transducteur, pendant une durée maximale prédéterminée.

De façon optionnelle également, l'unité centrale électronique est programmée pour :
- déterminer, pour chaque signal électrique reçu de chaque transducteur, plusieurs deuxièmes instants de premiers passages à zéro de plusieurs dérivées n-ièmes de ce signal électrique, 0≤n≤N, où N est strictement positif,
- identifier, pour chaque signal électrique reçu de chaque transducteur, plusieurs instants de détection d'impact dans ce signal électrique à partir des deuxièmes instants déterminés, et
- en déduire plusieurs localisations possibles de l'impact et déterminer une localisation finale par moyenne et/ou optimisation d'un critère de vraisemblance.

De façon optionnelle également, un dispositif de localisation d'un impact selon l'invention peut comporter au moins quatre transducteurs disposés et répartis contre la surface interactive, l'unité centrale électronique étant en outre programmée pour :
- à partir d'au moins une localisation déterminée de l'impact, déterminer, géométriquement et en connaissant une vitesse de propagation des ondes mécaniques progressives dans la surface interactive, des instants théoriques attendus de détection de l'impact par chacun des transducteurs,
- comparer les instants théoriques de détection de l'impact aux instants identifiés de détection de l'impact, et
- en déduire une valeur de vraisemblance de ladite au moins une localisation.

Il est également proposé une installation de tir sportif comportant :
- une cible à surface interactive,
- un dispositif de localisation d'un impact selon l'invention, pour la détermination de valeurs de localisations d'impacts contre la surface interactive de la cible,
- un serveur de stockage desdites valeurs de localisations d'impacts,
- un émetteur, pour la transmission desdites valeurs de localisation d'impacts depuis l'unité centrale électronique du dispositif de localisation vers le serveur de stockage, et
- un dispositif portable de téléphonie ou d'assistance numérique personnelle muni d'une application logicielle de téléchargement et de traitement d'au moins une partie des valeurs de localisations d'impacts stockées par le serveur en vue de leur présentation à un utilisateur.

Il est également proposé une installation de tir à l'arc comportant :
- une cible à surface interactive,
- un dispositif de localisation d'un impact selon l'invention, et
- au moins une flèche dont une extrémité destinée à atteindre la surface interactive de la cible est munie d'un embout d'amortissement de choc.

De façon optionnelle, la cible comporte :
- une première plaque, par exemple constituée de paille ou de mousse dense, sur une face avant de laquelle est affiché un repère de la cible, et
- une deuxième plaque protectrice transparente disposée contre la face avant de la première plaque, cette deuxième plaque protectrice transparente comportant la surface interactive et présentant un repère visuel permettant un centrage par rapport au repère de la cible.

Il est également proposé un procédé de localisation d'un impact contre une surface interactive apte à faire propager des ondes mécaniques progressives à partir de l'impact, comportant les étapes suivantes :
- capter, à l'aide d'au moins trois transducteurs disposés et répartis contre la surface interactive, les ondes mécaniques progressives se propageant dans la surface interactive et les transformer en signaux électriques, et
- localiser l'impact dans la surface interactive, à l'aide d'une unité centrale électronique reliée aux transducteurs pour recevoir leurs signaux électriques, par une analyse de différences de temps de propagation des ondes mécaniques progressives issues de l'impact vers les transducteurs sur la base d'instants de détection de l'impact identifiés dans les signaux électriques reçus,
la localisation d'impact comportant les étapes suivantes :
- déclencher une détection d'impact à partir d'un premier instant où au moins une dérivée M-ième d'au moins l'un des signaux électriques reçus par l'unité centrale électronique dépasse une valeur seuil prédéterminée non nulle, où M est un nombre entier positif ou nul, et
- après déclenchement de la détection d'impact :
   - déterminer, pour chaque signal électrique reçu de chaque transducteur, au moins un deuxième instant, postérieur au premier instant, de premier passage à zéro d'au moins une dérivée N-ième de ce signal électrique, où N est un nombre entier positif ou nul, et
   - identifier, pour chaque signal électrique reçu de chaque transducteur, au moins un instant de détection d'impact dans ce signal électrique à partir dudit au moins un deuxième instant déterminé.

Il est également proposé un programme d'ordinateur téléchargeable depuis un réseau de communication et/ou enregistré sur un support lisible par ordinateur et/ou exécutable par un processeur, comprenant des instructions pour l'exécution des étapes d'un procédé de localisation d'impact selon l'invention, lorsque ledit programme est exécuté sur un ordinateur.

L'invention sera mieux comprise à l'aide de la description qui va suivre, donnée uniquement à titre d'exemple et faite en se référant aux dessins annexés dans lesquels :
- la figure 1 représente schématiquement la structure générale d'une installation comportant un dispositif de localisation d'impact selon un mode de réalisation de l'invention,
- la figure 2 illustre la forme temporelle d'un signal électrique retourné par un transducteur du dispositif de localisation de la figure 1 lors d'un impact,
- les figures 3 et 4 illustrent deux modes de réalisation d'un transducteur du dispositif de localisation de la figure 1,
- la figure 5 illustre les étapes successives d'un procédé de localisation d'impact selon un mode de réalisation de l'invention,
- la figure 6 représente schématiquement une installation de tir sportif selon un mode de réalisation de l'invention,
- la figure 7 est une vue de côté d'une cible à surface interactive de l'installation de tir sportif de la figure 6, et
- la figure 8 représente schématiquement une installation de tir à l'arc selon un mode de réalisation de l'invention.

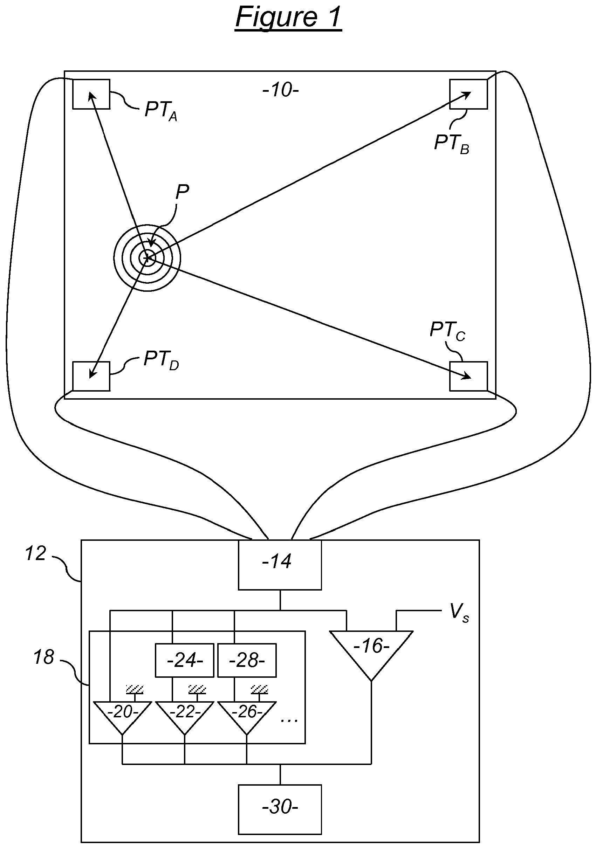

L'installation représentée schématiquement sur la figure 1 comporte une surface interactive rectangulaire 10, apte à faire propager des ondes mécaniques progressives à partir d'un impact P, et un dispositif de localisation de tout impact contre cette surface interactive 10.

Le dispositif de localisation comporte :
- quatre transducteurs PT_{A}, PT_{B}, PT_{C} et PT_{D} disposés et répartis contre la surface interactive 10, plus précisément aux quatre coins du rectangle qu'elle forme, conçus pour capter les ondes mécaniques progressives se propageant dans la surface interactive et les transformer en signaux électriques, et
- une unité centrale électronique 12, reliée aux transducteurs PT_{A}, PT_{B}, PT_{C} et PT_{D} pour recevoir leurs signaux électriques, programmée pour localiser l'impact P dans la surface interactive 10 par une analyse de différences de temps de propagation des ondes mécaniques progressives issues de l'impact P vers les transducteurs PT_{A}, PT_{B}, PT_{C} et PT_{D} sur la base d'instants de détection de l'impact P identifiés dans les signaux électriques reçus.

On notera que, de façon générale, la surface interactive 10 est quelconque, pas nécessairement rectangulaire. Le nombre de transducteurs est également quelconque, au minimum égal à trois pour permettre une localisation par analyse des différences de temps de propagation comme enseigné dans le document US 6,933,930 B2 ou US 6,367,800 B1.

L'unité centrale électronique 12 comporte plus précisément une interface 14 de réception des signaux électriques fournis par chacun des quatre transducteurs PT_{A}, PT_{B}, PT_{C} et PT_{D}. Cette interface peut comporter un amplificateur analogique.

L'unité centrale électronique 12 comporte en outre un comparateur 16 entre une valeur seuil prédéterminée non nulle Vₛ et au moins une dérivée M-ième d'au moins l'un des signaux électriques reçus et transmis par l'interface 14, où M est un nombre entier positif ou nul. Dans l'exemple non limitatif illustré sur la figure 1, M = 0 et les signaux que reçoit le comparateur 16 sont directement les signaux électriques reçus et transmis par l'interface 14. Mais M pourrait être différent de 0 de sorte que les signaux que reçoit le comparateur 16 pourraient être des dérivées des signaux électriques reçus et transmis par l'interface 14.

L'unité centrale électronique 12 comporte en outre un module 18 de détection de passage à zéro d'au moins une dérivée N-ième de chaque signal électrique reçu et transmis par l'interface 14, où N est un nombre entier positif ou nul. Dans l'exemple non limitatif de la figure 1, ce module de détection 18 comporte trois comparateurs et deux dérivateurs. Un premier comparateur 20 compare directement (N = 0) chaque signal électrique reçus et transmis par l'interface 14 à une tension nulle. Un deuxième comparateur 22 compare chaque dérivée première (N = 1) de chaque signal électrique reçus et transmis par l'interface 14 à une tension nulle. Pour ce faire, chaque signal électrique reçus et transmis par l'interface 14 est traité par un dérivateur 24 avant d'être fourni au deuxième comparateur 22. Enfin, un troisième comparateur 26 compare chaque dérivée seconde (N = 2) de chaque signal électrique reçus et transmis par l'interface 14 à une tension nulle. Pour ce faire, chaque signal électrique reçus et transmis par l'interface 14 est traité par un double dérivateur 28 avant d'être fourni au troisième comparateur 26. Bien que cela ne soit pas illustré sur la figure 1, le module de détection 18 pourrait comporter sur le même principe d'autres comparateurs associés à d'autres dérivateurs pour la détection de passages à zéros de dérivées N-ièmes, N ≥ 3, des signaux reçus et transmis par l'interface 14. En variante, il pourrait aussi comporter moins de trois comparateurs, notamment au minimum un seul comparateur pour n'effectuer qu'une seule détection de passage à zéro pour chaque signal électrique reçu et transmis par l'interface 14, que ce soit sur le signal lui-même ou l'une quelconque de ses dérivées.

L'unité centrale électronique 12 comporte en outre un calculateur 30 dont les entrées numériques sont reliées aux sorties des comparateurs 16, 20, 22 et 26. Ce calculateur 30 est par exemple un microprocesseur programmé pour :
- déclencher une détection d'impact à partir d'un premier instant t₁ où le comparateur 16 détecte au moins un dépassement de la valeur seuil prédéterminée Vₛ, et
- après déclenchement de la détection d'impact à l'instant t₁ :
   - déterminer, pour chaque signal électrique reçu de chaque transducteur, trois deuxièmes instants t₂, t₂' et t₂", postérieurs au premier instant, respectivement de premier passage à zéro de ce signal électrique (t₂ = instant où le comparateur 20 détecte un premier passage à zéro par valeurs décroissantes), de sa dérivée première (t₂' = instant où le comparateur 22 détecte un premier passage à zéro par valeurs décroissantes) et de sa dérivée seconde (t₂" = instant où le comparateur 26 détecte un premier passage à zéro par valeurs décroissantes), et
   - identifier, pour chaque signal électrique reçu de chaque transducteur, trois instants de détection d'impact dans ce signal électrique à partir des trois deuxièmes instants déterminés t₂, t₂' et t₂".

Plus précisément, les entrées numériques échantillonnent les signaux reçus et sont par exemple cadencées par l'horloge interne du calculateur 30 (notamment à l'aide de périphériques tels que des « timers » de microcontrôleur). Les fréquences d'échantillonnage habituelles vont aujourd'hui de 60 MHz à plus de 200 MHz. Dès que l'instant t₁ est détecté par l'entrée numérique recevant la sortie du comparateur 16, une mémorisation des autres entrées numériques recevant les sorties des comparateurs 20, 22 et 26 est réalisée à la fréquence d'échantillonnage pendant une durée maximale prédéterminée. Cette durée maximale est définie de manière à être suffisante pour considérer que tous les premiers passages à zéro des dérivées N-ièmes considérées auront lieu avant son expiration : on comprend donc qu'elle est définie en fonction de la vitesse de propagation des ondes mécaniques progressives et des dimensions latérales de la surface interactive 10. En pratique, une durée de 50 µs ou moins peut suffire pour une surface interactive de dimensions latérales inférieures à 30 cm dans laquelle les ondes mécaniques progressives se propagent à 5500 m/s.

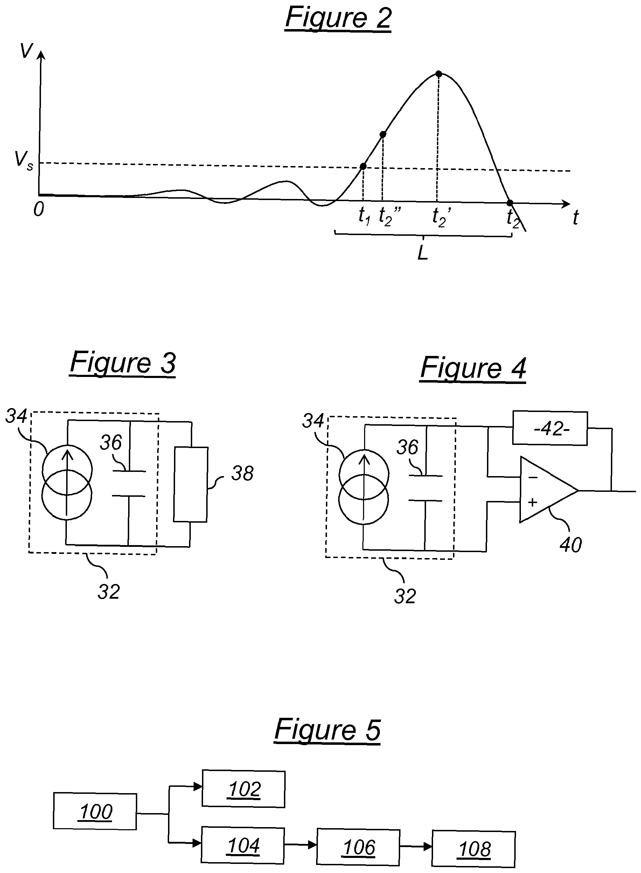

Les instants t₁, t₂, t₂' et t₂" sont illustrés sur la figure 2 dans un même signal retourné par l'un quelconque des transducteurs PT_{A}, PT_{B}, PT_{C} et PT_{D} lors d'un impact P. Ce signal présente quelques micro-oscillations de très faibles amplitudes précédant un lobe principal caractéristique de l'impact P et suivi d'autres oscillations allant en s'atténuant. L'instant t₁ est celui du dépassement de la valeur seuil prédéterminée Vₛ. Celle-ci est choisie de manière à dépasser le bruit et les micro-oscillations précédant l'impact P représenté par le lobe principal L du signal illustré, généralement autour de 10 mV. Elle sert à détecter le front montant de ce lobe principal L. L'instant t₂ est celui du premier passage à zéro par valeurs descendantes du lobe principal L. L'instant t₂' est celui du premier passage à zéro par valeurs descendantes de la dérivée première du lobe principal L, c'est-à-dire le maximum du lobe principal L. L'instant t₂" est celui du premier passage à zéro par valeurs descendantes de la dérivée seconde du lobe principal L, c'est-à-dire le premier point d'inflexion par valeurs croissantes du lobe principal L. La propriété astucieusement exploitée par la présente invention est que les instants t₂, t₂' et t₂" sont nettement moins dépendants des distances entre l'impact P et les transducteurs PT_{A}, PT_{B}, PT_{C}, PT_{D} que l'instant t₁. Cette propriété est due au fait qu'ils sont liés à des points caractéristiques du lobe principal L qui ne dépendent pas de l'amplitude du signal, contrairement à l'instant t₁.

Dans un mode de réalisation préféré, ce sont les instants t₂, t₂' et t₂" de passages à zéro eux-mêmes qui sont identifiés comme instants de détection de l'impact P par l'unité centrale électronique 12.

Par ailleurs, selon un mode de réalisation possible, l'instant t₁ est commun à tous les signaux fournis par les quatre transducteurs PT_{A}, PT_{B}, PT_{C} et PT_{D}. Il s'agit de l'instant de détection du dépassement de la valeur seuil prédéterminée Vₛ par le premier de ces signaux. Suite à cet instant t₁ unique, les instants t₂, t₂' et t₂" sont déterminés pour chacun de ces signaux en imposant par exemple un certain nombre minimal de valeurs hautes successives dans les entrées numériques échantillonnées avant un passage à zéro pour que ce dernier soit effectivement considéré comme un premier passage à zéro par valeurs décroissantes, de manière à éviter de fausses détections sur les micro-ondulations précédant chaque lobe principal significatif d'une détection de l'impact P. Ce nombre minimal, significatif d'une largeur supposée du lobe principal de chaque signal, peut être établi par calibrage et différer selon les signaux analysés, selon qu'il s'agit d'un signal directement fourni par un transducteur ou de l'une de ses dérivées. On remarque ainsi que, pour des ondes mécaniques progressives se propageant à 5500 m/s dans une surface interactive en polycarbonate, le lobe principal d'un signal électrique fourni par l'un quelconque des transducteurs suite à un impact présente une largeur attendue d'environ 2 µs.

Selon un autre mode de réalisation possible, un instant t₁ de dépassement de la valeur seuil prédéterminée Vₛ pourrait être déterminé indépendamment pour chacun des signaux fournis par les quatre transducteurs PT_{A}, PT_{B}, PT_{C} et PT_{D}.

En variante également, l'instant t₁ peut être déterminé par dépassement de seuil Vₛ de l'une quelconque des dérivées successives de l'un ou plusieurs des signaux fournis par les quatre transducteurs PT_{A}, PT_{B}, PT_{C} et PT_{D}.

Dans l'exemple illustré par la figure 1, le fonctionnement de l'unité centrale électronique 12 tel que détaillé ci-dessus permet l'obtention de douze instants de détection de l'impact P identifiés dans les signaux électriques reçus :
- les trois instants t_{A,2}, t_{A,2}' et t_{A,2}" respectivement identifiés dans le signal électrique fourni par le transducteur PT_{A}, sa dérivée première et sa dérivée seconde,
- les trois instants t_{B,2}, t_{B,2}' et t_{B,2}" respectivement identifiés dans le signal électrique fourni par le transducteur PT_{B}, sa dérivée première et sa dérivée seconde,
- les trois instants t_{C,2}, t_{C,2}' et t_{C,2}" respectivement identifiés dans le signal électrique fourni par le transducteur PT_{C}, sa dérivée première et sa dérivée seconde, et
- les trois instants t_{D,2}, t_{D,2}' et t_{D,2}" respectivement identifiés dans le signal électrique fourni par le transducteur PT_{D}. sa dérivée première et sa dérivée seconde.

On notera que, bien que les instants t₁, t_{A,2}, t_{B,2}, t_{C,2}, t_{D,2}, t_{A,2}', t_{B,2}', t_{C,2}', t_{D,2}', t_{A,2}", t_{B,2}", t_{C,2}", t_{D,2}" aient été décrits comme détectés après échantillonnage par les entrées numériques du calculateur 30, le traitement des signaux par les éléments 14, 16 et 18 peut être entièrement analogique, de sorte que la détection de ces instants elle-même pourrait en variante être également analogique.

De façon connue en soi et à l'aide de formules de calcul qui peuvent être préétablies, le calculateur 30 est programmé pour déterminer une localisation, notée par exemple (x,y) en coordonnées cartésiennes dans un repère lié à la surface interactive 10, à partir des instants identifiés t_{A,2}, t_{B,2}, t_{C,2} et t_{B,2}, de la vitesse de propagation des ondes mécaniques progressives dans la surface interactive 10 et des localisations des quatre transducteurs PT_{A}, PT_{B}, PT_{C} et PT_{D}. De même, il est programmé pour déterminer une localisation notée (x',y') à partir des instants identifiés t_{A,2}', t_{B,2}', t_{C,2}' et t_{B,2}'. De même, il est programmé pour déterminer une localisation notée (x",y") à partir des instants identifiés t_{A,2}", t_{B,2}", t_{C,2}" et t_{B,2}". Par généralisation, il est programmé pour déterminer une localisation notée (x^{(N)},y^{(N)}) à partir d'instants t_{A,2}^{(N)}, t_{B,2}^{(N)}, t_{C,2}^{(N)} et t_{D,2}^{(N)} qui pourraient être identifiés dans des dérivées N-ièmes des signaux fournis par les quatre transducteurs PT_{A}, PT_{B}, PT_{C} et PT_{D}.

En théorie, les coordonnées (x,y), (x',y') et (x",y") devraient être identiques puisque les quadruplets (t_{A,2}, t_{B,2}, t_{C,2}, t_{D,2}), (t_{A,2}', t_{B,2}', t_{C,2}', t_{D,2}') et (t_{A,2}", t_{B,2}", t_{C,2}", t_{D,2}") sont théoriquement identiques à deux constantes près. En pratique, ce n'est jamais le cas, notamment en raison du pas d'échantillonnage des entrées numériques du calculateur 30 et du bruit de mesure. Il est alors possible d'exploiter les redondances résultant des douze instants de détection de l'impact P identifiés, puisque seulement trois instants identifiés à partir de trois transducteurs différents sont *a minima* théoriquement nécessaires. Notamment, il est possible de déterminer une localisation finale (x_{f},y_{f}) en effectuant une moyenne des localisations (x,y), (x',y') et (x",y"). Il est aussi possible d'associer chaque localisation (x,y), (x',y') et (x",y") à un calcul de vraisemblance et d'en tenir compte dans le calcul de la moyenne précitée ou pour sélectionner l'une des localisations.

Le calcul de vraisemblance mentionné ci-dessus exploite par exemple le fait que pour chaque localisation (x,y), (x',y'), (x",y") ou plus généralement (x^{(N)},y^{(N)}), plus de trois transducteurs sont sollicités. Ainsi, pour chaque localisation (x^{(N)},y^{(N)}), avec N ≥ 0, il est possible de déterminer géométriquement (par Pythagore), et en connaissant la vitesse de propagation des ondes mécaniques progressives dans la surface interactive 10, des instants théoriques attendus de détection t-th_{A,2}^{(N)}, t-th_{B,2}^{(N)}, t-th_{C,2}^{(N)}, t-th_{D,2}^{(N)} et d'en déduire une valeur de vraisemblance (erreur quadratique ou autre méthode bien connue) en les comparant aux instants identifiés t_{A,2}^{(N)}, t_{B,2}^{(N)}, t_{C,2}^{(N)} et t_{D,2}^{(N)}.

Le calculateur 30 a été présenté précédemment sous la forme d'un microprocesseur programmé pour réaliser un certain nombre de fonctions pouvant être mises en œuvre à l'aide de programmes d'ordinateurs, c'est-à-dire sous la forme d'un dispositif informatique. Mais ces fonctions pourraient aussi être au moins en partie micro programmées ou micro câblées dans des circuits intégrés dédiés. Ainsi, en variante, le dispositif informatique mettant en oeuvre le calculateur 30 pourrait être remplacé par un dispositif électronique composé uniquement de circuits numériques (sans programme d'ordinateur) pour la réalisation des mêmes actions.

Chaque transducteur PT_{A}, PT_{B}, PT_{C} ou PT_{D} de la figure 1 peut être réalisé sous la forme illustrée schématiquement sur la figure 3. Il comporte un capteur piézoélectrique 32 dont le schéma électrique équivalent comporte une source de courant 34 montée en parallèle avec une capacité 36. La capacité 36 est elle-même raccordée en parallèle avec une charge de sortie purement résistive. Il s'agit plus précisément d'une résistance 38 dont l'impédance est avantageusement inférieure au dixième de l'impédance de la capacité 36 à une fréquence moyenne des ondes mécaniques progressives issues de l'impact P, c'est-à-dire par exemple à une fréquence voisine de 200 kHz pour une surface interactive 10 en acier. Il est astucieux de choisir une charge résistive aussi faible par rapport à la capacité 36. Cela permet d'éviter un effet intégrateur et une distorsion du signal électrique fourni par le capteur piézoélectrique 32. Il en résulte une meilleure pertinence des instants t₂, t₂' et t₂" de passages à zéro identifiés en tant qu'instants de détection de l'impact P par l'unité centrale électronique 12, et donc une meilleure localisation. Il convient de remarquer que cette astuce est contraire à l'enseignement connu, par exemple celui des documents US 6,933,930 B2 et US 6,367,800 B1. En effet, dans ces documents, l'effet d'intégration et d'amplification que produit une forte impédance en sortie du capteur piézoélectrique 32 est recherché pour pouvoir détecter des impacts de faible énergie. Mais cela se fait au détriment de la qualité de la localisation pour deux raisons : tout d'abord, on abaisse ainsi la fréquence des signaux électriques, les fronts montants sont moins raides et on est moins précis sur la détection de seuil, en particulier en présence de bruit ou si les signaux sont fortement atténués ; ensuite, on retarde les instants de détection des passages à zéros et on est donc plus sensible aux échos ou perturbations qui apparaissent sur les signaux au voisinage des changements de propriétés mécaniques comme par exemple les bord de surface interactive.

Pour permettre de détecter des impacts de faible énergie conformément à l'invention, si le montage de la figure 3 ne convient pas, il est possible de réaliser chaque transducteur PT_{A}, PT_{B}, PT_{C} ou PT_{D} de la figure 1 sous la forme illustrée schématiquement sur la figure 4. Le transducteur PT_{A}, PT_{B}, PT_{C} ou PT_{D} comporte comme dans l'exemple précédent le capteur piézoélectrique 32 dont le schéma électrique équivalent comporte la source de courant 34 montée en parallèle avec la capacité 36. Mais la capacité 36 est raccordée en parallèle cette fois-ci avec une charge de sortie comportant un amplificateur opérationnel 40 monté en convertisseur de courant à tension. Il présente pour cela une résistance 42 disposée entre la sortie et l'entrée inverseuse de l'amplificateur opérationnel 40, les deux entrées inverseuse et non inverseuse de ce dernier étant respectivement raccordées directement aux deux bornes de la capacité 36. Ce montage permet d'éliminer le rôle intégrateur de la capacité 36 puisque la tension à ses bornes reste quasi nulle, le courant engendré par le capteur piézoélectrique 32 engendrant à son tour une tension dans la résistance 42 qui peut cette fois-ci être de forte valeur et donc permettre la détection d'impacts de faible énergie.

Le fonctionnement de l'installation de la figure 1 va maintenant être détaillé en référence à la figure 5.

À un instant initial t = 0, au cours d'une première étape 100, un impact P engendre des ondes mécaniques progressives destinées à se propager dans toutes les directions dans la surface interactive 10.

À partir de cet instant initial, au cours d'une étape 102, les quatre transducteurs PT_{A}, PT_{B}, PT_{C} et PT_{D} captent ces ondes mécaniques progressives et les transforment en signaux électriques.

Parallèlement à cette étape 102, au cours d'étapes 104, 106, 108, l'unité centrale électronique 12 reçoit les signaux électroniques fournis par les transducteurs PT_{A}, PT_{B}, PT_{C} et PT_{D} et son calculateur 30 les traite pour localiser l'impact P dans la surface interactive 10 par une analyse de différences de temps de propagation de ces ondes mécaniques progressives depuis l'impact jusqu'à chacun des transducteurs.

Plus précisément, au cours de l'étape 104, le calculateur 30 déclenche une détection d'impact à partir d'un instant où au moins une dérivée M-ième d'au moins l'un des signaux électriques reçus par l'unité centrale électronique 12 dépasse la valeur seuil prédéterminée Vₛ. Dans l'exemple de la figure 1, il s'agit du premier instant t₁ où le comparateur 16 détecte au moins un dépassement de la valeur seuil prédéterminée Vₛ. A partir de cet instant, une mémorisation des entrées numériques recevant les sorties des comparateurs 20, 22 et 26 est réalisée à la fréquence d'échantillonnage pendant la durée maximale prédéterminée.

Ensuite, au cours de l'étape 106, le calculateur 30 détermine pour chaque signal électrique reçu de chaque transducteur PT_{A}, PT_{B}, PT_{C} et PT_{D}, au moins un deuxième instant, postérieur au premier instant t₁, de premier passage à zéro d'au moins une dérivée N-ième de ce signal électrique. Dans l'exemple de la figure 1, il s'agit des douze deuxièmes instants t_{A,2}, t_{B,2}, t_{C,2}, t_{D,2}, t_{A,2}', t_{B,2}', t_{C,2}', t_{D,2}', t_{A,2}", t_{B,2}", t_{C,2}", t_{D,2}" de premier passage à zéro des signaux électriques reçus (t_{A,2}, t_{B,2}, t_{C,2}, t_{D,2} = instants où le comparateur 20 détecte un premier passage à zéro par valeurs décroissantes), de leurs dérivées premières (t_{A,2}', t_{B,2}', t_{C,2}', t_{D,2}' = instants où le comparateur 22 détecte un premier passage à zéro par valeurs décroissantes) et de leurs dérivées secondes (t_{A,2}", t_{B,2}", t_{C,2}", t_{D,2}" = instants où le comparateur 26 détecte un premier passage à zéro par valeurs décroissantes). Tous ces deuxièmes instants sont identifiés comme des instants de détection de l'impact P.

Ensuite, au cours de l'étape 108, le calculateur 30 détermine comme détaillé précédemment la localisation de l'impact P, par exemple en coordonnées cartésiennes dans la surface interactive 10, sur la base des douze instants de détection de l'impact P identifiés dans les signaux électriques reçus. Il est alors prêt pour la détection d'un nouvel impact (retour à l'étape 100).

On notera que le calculateur 30 peut également être configuré pour mesurer une énergie de l'impact P en plus de sa localisation.

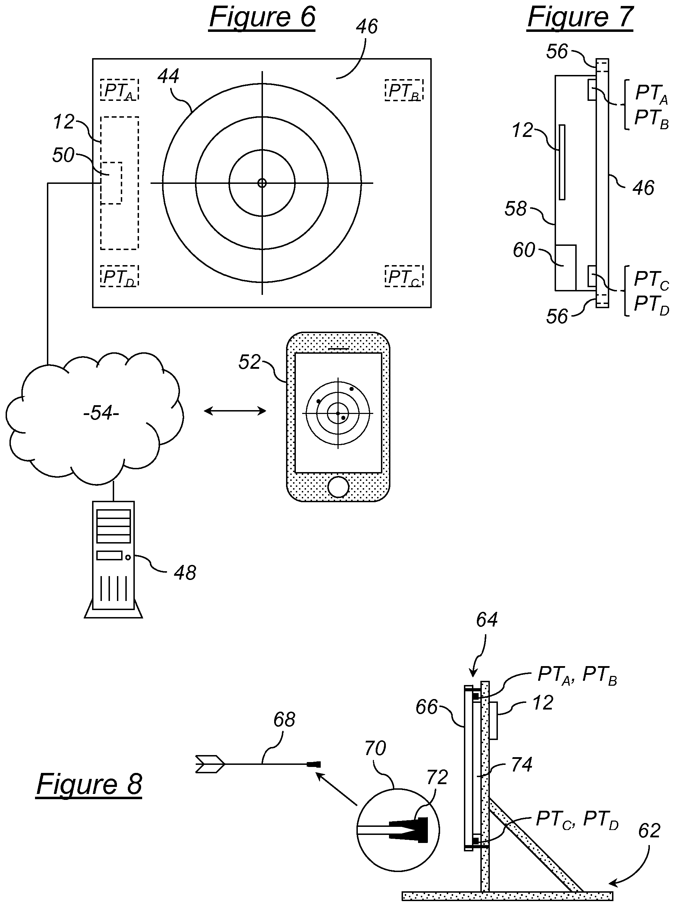

L'installation de la figure 6 est une installation de tir sportif qui met en oeuvre, de façon avantageuse mais optionnelle, les principes de la présente invention. Il peut s'agir de tir à air comprimé, à carabine 22LR, à arbalète, etc.

Elle comporte :
- une cible 44 à surface interactive 46 munie d'un dispositif de localisation pour la détermination de valeurs de localisations d'impacts contre la surface interactive : ce dispositif comporte avantageusement l'unité centrale électronique 12 et les transducteurs PT_{A}, PT_{B}, PT_{C}, PT_{D} décrits précédemment, mais il pourrait s'agir aussi d'un dispositif de localisation conforme aux enseignements des documents US 6,933,930 B2 ou US 6,367,800 B1,
- un serveur 48 de stockage des valeurs de localisations d'impacts localisées par le dispositif 12, PT_{A}, PT_{B}, PT_{C} et PT_{D},
- un émetteur 50, prévu par exemple dans l'unité centrale électronique 12, pour la transmission de ces valeurs de localisation d'impacts depuis l'unité centrale électronique 12 vers le serveur de stockage 48, et
- un dispositif portable 52 de téléphonie ou d'assistance numérique personnelle muni d'une application logicielle de téléchargement et de traitement d'au moins une partie des valeurs de localisations d'impacts stockées par le serveur 48 en vue de leur présentation à un utilisateur (affichage, données historiques et statistiques, ...).

Le serveur de stockage 48 communique avec l'émetteur 50 de l'unité centrale électronique 12 et avec le dispositif portable 52 à l'aide d'au moins un réseau 54 de transmission de données avec ou sans fil. Par exemple, l'émetteur 50 transmet ses données au serveur de stockage 48 selon un protocole de communication sans fil tel que Bluetooth ou WiFi et le serveur de stockage 48 communique avec le dispositif portable 52 selon un protocole de télécommunication sans fil.

La surface interactive 46 est par exemple constituée d'une tôle rigide résistante à l'énergie des impacts au dos de laquelle sont collés les transducteurs PT_{A}, PT_{B}, PT_{C} et PT_{D}. Comme par ailleurs illustré sur la figure 7 en vue de côté, elle peut comporter des éléments de fixation 56 et un boîtier 58 à l'arrière dans lequel peuvent être disposés les transducteurs PT_{A}, PT_{B}, PT_{C} et PT_{D}, l'unité centrale électronique 12 et une unité autonome 60 d'alimentation en énergie électrique (pile, batterie, ...).

On notera enfin qu'au moins une partie de l'unité centrale électronique 12, notamment une partie du calculateur 30, peut être fonctionnellement déportée sur le dispositif portable 52 de téléphonie ou d'assistance numérique personnelle puisque ce dernier possède ses propres capacités de calcul.

L'installation de la figure 8 est une installation de tir à l'arc qui met en oeuvre, de façon avantageuse mais optionnelle, les principes de la présente invention.

Elle comporte :
- un support 62 de maintien stable au sol, par exemple un chevalet,
- une cible 64 à surface interactive 66 munie d'un dispositif de localisation d'un impact contre la surface interactive : ce dispositif comporte avantageusement l'unité centrale électronique 12 et les transducteurs PT_{A}, PT_{B}, PT_{C}, PT_{D} décrits précédemment, mais il pourrait s'agir aussi d'un dispositif de localisation conforme aux enseignements des documents US 6,933,930 B2 ou US 6,367,800 B1,
- au moins une flèche 68 dont une extrémité 70, destinée à atteindre la surface interactive 66 de la cible 64, est munie d'un embout 72 d'amortissement de choc, par exemple un embout en plastique ou caoutchouc de type « pointe blunt » permettant de ne pas endommager la surface interactive 66.

De façon optionnelle, la cible 64 peut comporter une première plaque conventionnelle 74 constituée de paille ou de mousse dense contre une face avant de laquelle est disposée la surface interactive 66 sous la forme d'une deuxième plaque protectrice transparente, par exemple en polycarbonate.

Ainsi pour l'entraînement et afin de limiter l'usure de la plaque conventionnelle 74, on peut disposer la plaque protectrice transparente 66 contre sa face avant et la fixer au support 62. Un repère visuel sur cette plaque protectrice 66 permet par exemple un centrage par rapport à la plaque conventionnelle 74 sur la face avant de laquelle est affiché un repère de la cible. Les transducteurs PT_{A}, PT_{B}, PT_{C}, PT_{D} sont alors positionnés aux quatre coins de la plaque protectrice 66. La flèche 68, lorsqu'elle atteint la cible 64, rebondit contre la plaque protectrice transparente 66 mais le point d'impact peut être localisé comme détaillé précédemment.

Pour les compétitions, la plaque protectrice transparente 66 peut-être enlevée et la cible 64 ne comporte alors plus que la plaque conventionnelle 74.

On notera également que, comme dans l'exemple précédent, les localisations d'impacts peuvent être transmises en temps réel à un dispositif portable de téléphonie ou d'assistance numérique personnelle muni d'une application logicielle adaptée, permettant ainsi à un utilisateur de voir immédiatement le résultat de ses tirs et ses statistiques d'entraînement. Dans un mode de réalisation préféré, pour plus de réalisme, on peut afficher sur le dispositif portable une flèche en perspective au lieu d'un simple point d'impact. La forme du signal mesuré par les transducteurs PT_{A}, PT_{B}, PT_{C}, PT_{D} peut en particulier donner une idée de l'orientation de la flèche.

Il apparaît clairement qu'un dispositif de localisation d'impact contre une surface interactive tel que celui décrit précédemment permet d'améliorer les performances d'une technologie de localisation par détection d'ondes mécaniques progressives et analyse de différences de temps de propagation.

Il apparaît également clairement que des installations de tir telles que celles décrites précédemment améliorent très sensiblement les possibilités techniques d'interaction, en exploitant astucieusement l'intérêt d'une technologie de localisation par détection d'ondes mécaniques progressives et analyse de différences de temps de propagation, avec ou sans les améliorations de performances apportées par le dispositif de la figure 1.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus sans s'écarter de la portée de l'invention qui est définie par les revendications annexées.

## Revendications

1. Dispositif de localisation d'un impact (P) contre une surface interactive (10) apte à faire propager des ondes mécaniques progressives à partir de l'impact (P), comportant :
- au moins trois transducteurs (PT_{A}, PT_{B}, PT_{C}, PT_{D}) disposés et répartis contre la surface interactive (10), conçus pour capter les ondes mécaniques progressives se propageant dans la surface interactive (10) et les transformer en signaux électriques, et
- une unité centrale électronique (12), reliée aux transducteurs (PT_{A}, PT_{B}, PT_{C}, PT_{B}) pour recevoir leurs signaux électriques, programmée pour localiser l'impact (P) dans la surface interactive (10) par une analyse de différences de temps de propagation des ondes mécaniques progressives issues de l'impact (P) vers les transducteurs (PT_{A}, PT_{B}, PT_{C}, PT_{D}) sur la base d'instants (t₂, t₂', t₂") de détection de l'impact (P) identifiés dans les signaux électriques reçus,
**caractérisé en ce que** l'unité centrale électronique (12) est programmée pour :
- déclencher une détection d'impact à partir d'un premier instant (t₁) où au moins une dérivée M-ième d'au moins l'un des signaux électriques reçus dépasse une valeur seuil prédéterminée (Vₛ) non nulle, où M est un nombre entier positif ou nul, et
- après déclenchement de la détection d'impact :
• déterminer, pour chaque signal électrique reçu de chaque transducteur (PT_{A}, PT_{B}, PT_{C}, PT_{D}), au moins un deuxième instant (t₂, t₂', t₂"), postérieur au premier instant (t₁), de premier passage à zéro d'au moins une dérivée N-ième de ce signal électrique, où N est un nombre entier positif ou nul, et
• identifier, pour chaque signal électrique reçu de chaque transducteur (PT_{A}, PT_{B}, PT_{C}, PT_{D}), au moins un instant (t₂, t₂', t₂") de détection d'impact dans ce signal électrique à partir dudit au moins un deuxième instant déterminé (t₂, t₂', t₂").

2. Dispositif de localisation d'un impact (P) selon la revendication 1, dans lequel chaque transducteur (PT_{A}, PT_{B}, PT_{C}, PT_{D}) est un capteur piézoélectrique (32) présentant une capacité (36) et une charge de sortie montée en parallèle telles que :
- la charge de sortie est purement résistive (38) et son impédance est inférieure au dixième de l'impédance de la capacité (36) à une fréquence moyenne des ondes mécaniques progressives issues de l'impact (P), ou
- la charge de sortie comporte un amplificateur opérationnel (40, 42) monté en convertisseur de courant à tension.

3. Dispositif de localisation d'un impact (P) selon la revendication 1 ou 2, dans lequel l'unité centrale électronique (12) est programmée pour déclencher la détection d'impact en mémorisant des valeurs échantillonnées d'au moins un signal issu d'au moins un comparateur à zéro (20, 22, 26) de ladite au moins une dérivée N-ième de chaque signal électrique reçu de chaque transducteur (PT_{A}, PT_{B}, PT_{C}, PT_{D}), pendant une durée maximale prédéterminée.

4. Dispositif de localisation d'un impact (P) selon l'une quelconque des revendications 1 à 3, dans lequel l'unité centrale électronique (12) est programmée pour :
- déterminer, pour chaque signal électrique reçu de chaque transducteur (PT_{A}, PT_{B}, PT_{C}, PT_{D}), plusieurs deuxièmes instants (t₂, t₂', t₂") de premiers passages à zéro de plusieurs dérivées n-ièmes de ce signal électrique, 0≤n≤N, où N est strictement positif,
- identifier, pour chaque signal électrique reçu de chaque transducteur (PT_{A}, PT_{B}, PT_{C}, PT_{D}), plusieurs instants (t₂, t₂', t₂") de détection d'impact dans ce signal électrique à partir des deuxièmes instants déterminés (t₂, t₂', t₂"), et
- en déduire plusieurs localisations possibles de l'impact (P) et déterminer une localisation finale par moyenne et/ou optimisation d'un critère de vraisemblance.

5. Dispositif de localisation d'un impact (P) selon l'une quelconque des revendications 1 à 4, comportant au moins quatre transducteurs (PT_{A}, PT_{B}, PT_{C}, PT_{D}) disposés et répartis contre la surface interactive (10), dans lequel l'unité centrale électronique (12) est en outre programmée pour :
- à partir d'au moins une localisation déterminée de l'impact (P), déterminer, géométriquement et en connaissant une vitesse de propagation des ondes mécaniques progressives dans la surface interactive (10), des instants théoriques attendus de détection de l'impact (P) par chacun des transducteurs (PT_{A}, PT_{B}, PT_{C}, PT_{D}),
- comparer les instants théoriques de détection de l'impact (P) aux instants identifiés (t₂, t₂', t₂") de détection de l'impact, et
- en déduire une valeur de vraisemblance de ladite au moins une localisation.

6. Installation de tir sportif comportant :
- une cible (44) à surface interactive (46),
- un dispositif de localisation d'un impact selon l'une quelconque des revendications 1 à 5, pour la détermination de valeurs de localisations d'impacts contre la surface interactive (46) de la cible (44),
- un serveur (48) de stockage desdites valeurs de localisations d'impacts,
- un émetteur (50), pour la transmission desdites valeurs de localisation d'impacts depuis l'unité centrale électronique (12) du dispositif de localisation vers le serveur de stockage (48), et
- un dispositif portable (52) de téléphonie ou d'assistance numérique personnelle muni d'une application logicielle de téléchargement et de traitement d'au moins une partie des valeurs de localisations d'impacts stockées par le serveur en vue de leur présentation à un utilisateur.

7. Installation de tir à l'arc comportant :
- une cible (64) à surface interactive (66),
- un dispositif de localisation d'un impact selon l'une quelconque des revendications 1 à 5, et
- au moins une flèche (68) dont une extrémité (70) destinée à atteindre la surface interactive (66) de la cible (64) est munie d'un embout (72) d'amortissement de choc.

8. Installation de tir à l'arc selon la revendication 7, dont la cible (64) comporte :
- une première plaque (74), par exemple constituée de paille ou de mousse dense, sur une face avant de laquelle est affiché un repère de la cible (64), et
- une deuxième plaque protectrice transparente (66) disposée contre la face avant de la première plaque (74), cette deuxième plaque protectrice transparente (66) comportant la surface interactive et présentant un repère visuel permettant un centrage par rapport au repère de la cible (64).

9. Procédé de localisation d'un impact (P) contre une surface interactive (10) apte à faire propager des ondes mécaniques progressives à partir de l'impact (P), comportant les étapes suivantes :
- capter (102), à l'aide d'au moins trois transducteurs (PT_{A}, PT_{B}, PT_{C}, PT_{B}) disposés et répartis contre la surface interactive (10), les ondes mécaniques progressives se propageant dans la surface interactive (10) et les transformer en signaux électriques, et
- localiser (104, 106, 108) l'impact (P) dans la surface interactive (10), à l'aide d'une unité centrale électronique (12) reliée aux transducteurs (PT_{A}, PT_{B}, PT_{C}, PT_{B}) pour recevoir leurs signaux électriques, par une analyse (108) de différences de temps de propagation des ondes mécaniques progressives issues de l'impact (P) vers les transducteurs (PT_{A}, PT_{B}, PT_{C}, PT_{D}) sur la base d'instants (t₂, t₂', t₂") de détection de l'impact (P) identifiés dans les signaux électriques reçus,
**caractérisé en ce que** la localisation d'impact (104, 106, 108) comporte les étapes suivantes :
- déclencher (104) une détection d'impact à partir d'un premier instant (t₁) où au moins une dérivée M-ième d'au moins l'un des signaux électriques reçus par l'unité centrale électronique (12) dépasse une valeur seuil prédéterminée (Vₛ) non nulle, où M est un nombre entier positif ou nul, et
- après déclenchement (104) de la détection d'impact :
• déterminer (106), pour chaque signal électrique reçu de chaque transducteur (PT_{A}, PT_{B}, PT_{C}, PT_{D}), au moins un deuxième instant (t₂, t₂', t₂"), postérieur au premier instant (t₁), de premier passage à zéro d'au moins une dérivée N-ième de ce signal électrique, où N est un nombre entier positif ou nul, et
• identifier (106), pour chaque signal électrique reçu de chaque transducteur (PT_{A}, PT_{B}, PT_{C}, PT_{D}), au moins un instant (t₂, t₂', t₂") de détection d'impact dans ce signal électrique à partir dudit au moins un deuxième instant déterminé (t₂, t₂', t₂").

10. Programme d'ordinateur téléchargeable depuis un réseau de communication et/ou enregistré sur un support lisible par ordinateur et/ou exécutable par un processeur (30), **caractérisé en ce qu'**il comprend des instructions pour l'exécution des étapes d'un procédé de localisation d'impact selon la revendication 9, lorsque ledit programme est exécuté sur un ordinateur.

## Patentansprüche

1. Vorrichtung zur Ortung eines Aufpralls (P) gegen eine interaktive Oberfläche (10), die imstande ist, mechanische Wanderwellen ausgehend von dem Aufprall (P) ausbreiten zu lassen, Folgendes beinhaltend:
- mindestens drei Transduktoren (PT_{A}, PT_{B}, PT_{C}, PT_{D}), die an der interaktiven Oberfläche (10) angeordnet und verteilt sind, die gestaltet sind, um die mechanischen Wanderwellen, die sich auf der interaktiven Oberfläche (10) ausbreiten, zu erfassen, und sie in elektrische Signale umzuwandeln, und
- eine elektronische Zentraleinheit (12), die mit den Transduktoren (PT_{A}, PT_{B}, PT_{C}, PT_{D}) verbunden ist, um deren elektrische Signale zu empfangen, die programmiert ist, um den Aufprall (P) an der interaktiven Oberfläche (10) durch eine Analyse von Ausbreitungszeitunterschieden der mechanischen Wanderwellen, die aus dem Aufprall (P) stammen, zu den Transduktoren (PT_{A}, PT_{B}, PT_{C}, PT_{D}) auf der Basis von Detektionsmomenten (t₂, t₂", t₂") des Aufpralls (P), die in den empfangenen elektrischen Signalen identifiziert werden, zu orten,
**dadurch gekennzeichnet, dass** die elektronische Zentraleinheit (12) programmiert ist, zum:
- Auslösen einer Aufpralldetektion ausgehend von einem ersten Moment (t₁), wo mindestens eine M-te Ableitung mindestens eines der empfangenen elektrischen Signale einen vorbestimmten Schwellenwert (Vs) ungleich null übersteigt, wo M eine positive ganze Zahl oder null ist, und
- nach dem Auslösen der Aufpralldetektion:
• Bestimmen für jedes, von jedem Transduktor (PT_{A}, PT_{B}, PT_{C}, PT_{D}) empfangene elektrische Signal mindestens eines zweiten Moments (t₂, t₂', t₂") nach dem ersten Moment (ti) eines ersten Übergangs auf null mindestens einer N-ten Ableitung dieses elektrischen Signals, wo N eine positive ganze Zahl oder null ist, und
• Identifizieren, für jedes empfangene elektrische Signal von jedem Transduktor (PT_{A}, PT_{B}, PT_{C}, PT_{D}) mindestens eines Aufpralldetektionsmoments (t₂, t₂', t₂") in diesem elektrischen Signal ausgehend von dem mindestens einen zweiten bestimmten Moment (t₂, t₂', t₂").

2. Vorrichtung zur Ortung eines Aufpralls (P) nach Anspruch 1, wobei jeder Transduktor (PT_{A}, PT_{B}, PT_{C}, PT_{D}) ein piezoelektrischer Sensor (32) ist, der eine Kapazität (36) aufweist, und eine parallel montierte Ausgangslast, derart, dass:
- die Ausgangslast rein ohmsch (38) ist, und ihre Impedanz kleiner als das Zehntel der Impedanz der Kapazität (36) bei einer mittleren Frequenz der mechanischen Wanderwellen, die aus dem Aufprall (P) stammen, ist, oder
- die Ausgangslast einen betrieblichen Verstärker (40, 42) beinhaltet, der als Wandler von Strom auf Spannung montiert ist.

3. Vorrichtung zur Ortung eines Aufpralls (P) nach Anspruch 1 oder 2, wobei die elektronische Zentraleinheit (12) programmiert ist, um die Aufpralldetektion auszulösen, indem abgetastete Werte mindestens eines Signals, das aus dem mindestens einen Vergleicher mit null (20, 22, 26) der mindestens einen N-ten Ableitung eines jeden elektrischen Signals, das von jedem Transduktor (PT_{A}, PT_{B}, PT_{C}, PT_{D}) empfangen wird, für eine vorbestimmte maximale Dauer gespeichert wird.

4. Vorrichtung zur Ortung eines Aufpralls (P) nach einem der Ansprüche 1 bis 3, wobei die elektronische Zentraleinheit (12) programmiert ist zum:
- Bestimmen, für jedes, von jedem Transduktor (PT_{A}, PT_{B}, PT_{C}, PT_{D}) empfangene elektrische Signal, mehrerer zweiter Momente (t₂, t₂", t₂") erster Übergänge auf null mehrerer n-ter Ableitungen dieses elektrischen Signals, 0≤n≤N, wo N strikt positiv ist,
- Identifizieren, für jedes, von jedem Transduktor (PT_{A}, PT_{B}, PT_{C}, PT_{D}) empfangene elektrische Signal mehrerer Aufpralldetektionsmomente (t₂, t₂', t₂") in diesem elektrischen Signal, ausgehend von den bestimmten zweiten Momenten (t₂, t_{2'}, t₂"), und
- daraus Ableiten mehrerer möglicher Ortungen des Aufpralls (P) und Bestimmen einer finalen Ortung durch Mitteln und/oder Optimieren eines Wahrscheinlichkeitskriteriums.

5. Vorrichtung zur Ortung eines Aufpralls (P) nach einem der Ansprüche 1 bis 4, mindestens vier Transduktoren (PT_{A}, PT_{B}, PT_{C}, PT_{D}) beihaltend, die an der interaktiven Oberfläche (10) angeordnet und verteilt sind, wobei die elektronische Zentraleinheit (12) weiter programmiert ist zum:
- Bestimmen, ausgehend von mindestens einer bestimmten Ortung des Aufpralls (P), geografisch, und durch Kenntnis einer Ausbreitungsgeschwindigkeit der mechanischen Wanderwellen auf der interaktiven Oberfläche (10) der erwarteten theoretischen Detektionsmomente des Aufpralls (P) durch jeden Transduktor (PT_{A}, PT_{B}, PT_{C}, PT_{D}),
- Vergleichen der theoretischen Detektionsmomente des Aufpralls (P) mit den identifizierten Aufpralldetektionsmomenten (t₂, t₂', t₂"), und
- daraus Ableiten eines Wahrscheinlichkeitswertes der mindestens einen Ortung.

6. Sportschießanlage, Folgendes beinhaltend:
- ein Ziel (44) mit interaktiver Oberfläche (46),
- eine Vorrichtung zur Ortung eines Aufpralls nach einem der Ansprüche 1 bis 5, zur Bestimmung der Aufprallortungswerte an der interaktiven Oberfläche (46) des Ziels (44),
- einen Server (48) zum Speichern der Aufprallortungswerte,
- einen Sender (50) zur Übertragung der Aufprallortungswerte von einer elektronischen Zentraleinheit (12) der Ortungsvorrichtung zu dem Server (48) zum Speichern, und
- eine tragbare Telefon- oder persönliche digitale Unterstützungsvorrichtung (52), die mit einer Software-Applikation zum Herunterladen und Verarbeiten mindestens eines Teils der Aufprallortungswerte versehen ist, die von dem Server in Hinblick auf deren Präsentation für einen Nutzer gespeichert werden.

7. Bogenschießanlage, Folgendes beinhaltend:
- ein Ziel (64) mit interaktiver Oberfläche (66),
- eine Vorrichtung zur Ortung eines Aufpralls nach einem der Ansprüche 1 bis 5, und
- mindestens einen Pfeil (68) von dem ein Ende (70), das dazu bestimmt ist, die interaktive Oberfläche (66) des Ziels (64) zu erreichen, mit einem Endstück (72) zur Aufpralldämpfung versehen ist.

8. Bogenschießanlage nach Anspruch 7, deren Ziel (64) Folgendes beinhaltet:
- eine erste Platte (74), beispielsweise bestehend aus Stroh oder dichtem Schaumstoff auf deren Vorderseite eine Markierung des Ziels (64) angezeigt ist, und
- eine zweite transparente Schutzplatte (66), die an der Vorderseite der ersten Platte (74) angeordnet ist, wobei diese zweite transparente Schutzplatte (66) die interaktive Oberfläche beinhaltet und eine Sichtmarkierung aufweist, die eine Zentrierung in Bezug auf die Markierung des Ziels (64) ermöglicht.

9. Verfahren zur Ortung eines Aufpralls (P) gegen eine interaktive Oberfläche (10), die imstande ist, mechanische Wanderwellen ausgehend von dem Aufprall (P) ausbreiten zu lassen, die folgenden Schritte beinhaltend:
- Erfassen (102), mithilfe von mindestens drei Transduktoren (PT_{A}, PT_{B}, PT_{C}, PT_{D}), die an der interaktiven Oberfläche (10) angeordnet und verteilt sind, der mechanischen Wanderwellen, die sich auf der interaktiven Oberfläche (10) ausbreiten, und deren Umwandeln in elektrische Signale, und
- Orten (104, 106, 108) des Aufpralls (P) an der interaktiven Oberfläche (10) mithilfe einer elektronischen Zentraleinheit (12), die mit den Transduktoren (PT_{A}, PT_{B}, PT_{C}, PT_{D}) verbunden ist, durch eine Analyse (108) von Ausbreitungszeitunterschieden der mechanischen Wanderwellen, die aus dem Aufprall (P) stammen, zu den Transduktoren (PT_{A}, PT_{B}, PT_{C}, PT_{D}) auf der Basis von Detektionsmomenten (t₂, t₂', t₂") des Aufpralls (P), die in den empfangenen elektrischen Signalen identifiziert werden,
**dadurch gekennzeichnet, dass** die Aufprallortung (104, 106, 108) die folgenden Schritte beinhaltet:
- Auslösen (104) einer Aufpralldetektion ausgehend von einem ersten Moment (t₁), wo mindestens eine M-te Ableitung mindestens eines der durch die elektronische Zentraleinheit (12) empfangenen elektrischen Signale einen vorbestimmten Schwellenwert (Vs) ungleich null übersteigt, wo M eine positive ganze Zahl oder null ist, und
- nach dem Auslösen (104) der Aufpralldetektion:
• Bestimmen (106) für jedes, von jedem Transduktor (PT_{A}, PT_{B}, PT_{C}, PT_{D}) empfangene elektrische Signal mindestens eines zweiten Moments (t₂, t₂", t₂") nach dem ersten Moment (ti) eines ersten Übergangs auf null mindestens einer N-ten Ableitung dieses elektrischen Signals, wo N eine positive ganze Zahl oder null ist, und
• Identifizieren (106), für jedes, von jedem Transduktor (PT_{A}, PT_{B}, PT_{C}, PT_{D}) empfangene elektrische Signal mindestens eines Aufpralldetektionsmoments (t₂, t₂', t₂") in diesem elektrischen Signal ausgehend von dem mindestens einen zweiten bestimmten Moment (t₂, t₂', t₂").

10. Computerprogramm, das aus einem Kommunikationsnetzwerk herunterladbar, und/oder auf einem von einem Computer lesbaren und/oder durch einen Prozessor (30) ausführbaren Support gespeichert ist, **dadurch gekennzeichnet, dass** es Befehle zur Ausführung der Schritte eines Verfahrens zum Orten eines Aufpralls nach Anspruch 9 umfasst, wenn das Programm auf einem Computer ausgeführt wird.

## Claims

1. A device for locating an impact (P) against an interactive surface (10) able to propagate progressive mechanical waves from the impact (P), comprising:
- at least three transducers (PT_{A}, PT_{B}, PT_{C}, PT_{D}) arranged and distributed against the interactive surface (10), designed to capture the progressive mechanical waves propagating in the interactive surface (10) and to transform them into electrical signals, and
- an electronic central unit (12), connected to the transducers (PT_{A}, PT_{B}, PT_{C}, PT_{D}) in order to receive their electrical signals, programmed to locate the impact (P) in the interactive surface (10) by analysing propagation time differences of progressive mechanical waves from the impact (P) to the transducers (PT_{A}, PT_{B}, PT_{C}, PT_{D}) on the basis of instants (t₂, t₂', t₂") of impact detection (P) identified in the electrical signals received,
**characterised in that** the electronic central unit (12) is programmed to:
- trigger an impact detection from a first instant (ti) when at least one M-th derivative from at least one of the received electrical signals exceeds a predetermined non-zero threshold value (Vₛ), where M is a positive integer or zero, and
- after triggering the impact detection:
• determining, for each electrical signal received from each transducer (PT_{A}, PT_{B}, PT_{C}, PT_{D}), at least one second instant (t₂, t₂', t₂"), subsequent to the first instant (t₁), of the first zero crossing of at least one N-th derivative of this electrical signal, where N is a positive integer or zero, and
• identifying, for each electrical signal received from each transducer (PT_{A}, PT_{B}, PT_{C}, PT_{D}), at least one instant (t₂, t₂', t₂") of impact detection in this electrical signal from said at least one second determined instant (t₂, t₂', t₂").

2. The device for locating an impact (P) according to claim 1, wherein each transducer (PT_{A}, PT_{B}, PT_{C}, PT_{D}) is a piezoelectric sensor (32) having a capacitor (36) and an output load mounted in parallel such that:
- the output load is purely resistive (38) and its impedance is less than one tenth of the impedance of the capacitor (36) at an average frequency of the progressive mechanical waves from the impact (P), or
- the output load comprises an operational amplifier (40, 42) mounted as a current/voltage converter.

3. The device for locating an impact (P) according to claim 1 or 2, wherein the electronic central unit (12) is programmed to trigger the impact detection by memorising sampled values of at least one signal from at least one zero comparator (20, 22, 26) of said at least one N-th derivative of each electrical signal received from each transducer (PT_{A}, PT_{B}, PT_{C}, PT_{D}), during a predetermined maximum duration.

4. The device for locating an impact (P) according to any of claims 1 to 3, wherein the electronic central unit (12) is programmed to:
- determine, for each electrical signal received from each transducer (PT_{A}, PT_{B}, PT_{C}, PT_{D}), several second instants (t₂, t₂', t₂") of first zero crossings of several n-th derivatives of this electrical signal, 0≤n≤N, where N is strictly positive,
- identify, for each electrical signal received from each transducer (PT_{A}, PT_{B}, PT_{C}, PT_{D}), several instants (t₂, t₂', t₂") of impact detection in this electrical signal from the determined second instants (t₂, t₂', t₂"), and
- deduce therefrom several possible locations of the impact (P) and determine a final location by averaging and/or optimisation of a likelihood criterion.

5. The device for locating an impact (P) according to any of claims 1 to 4, comprising at least four transducers (PT_{A}, PT_{B}, PT_{C}, PT_{D}) arranged and distributed against the interactive surface (10), wherein the electronic central unit (12) is furthermore programmed to:
- from at least one determined location of the impact (P), determine, geometrically and by knowing a propagation speed of the progressive mechanical waves in the interactive surface (10), expected theoretical instants of detection the impact (P) by each one of the transducers (PT_{A}, PT_{B}, PT_{C}, PT_{D}),
- compare the theoretical instants of impact (P) detection to the identified instants (t₂, t₂', t₂") of impact detection, and
- deduce therefrom a likelihood value of said at least one location.

6. A sports shooting facility comprising:
- a target (44) with an interactive surface (46),
- a device for locating an impact according to any of claims 1 to 5, for the determining of location values of impacts against the interactive surface (46) of the target (44),
- a server (48) for storing said location values of impacts,
- an emitter (50), for the transmitting of said location values of impacts from the electronic central unit (12) of the device for locating to the storage server (48), and
- a portable device (52) for telephony or personal digital assistance provided with a software application for the downloading and processing of at least one portion of the location values of impacts stored by the server for the purpose of presenting them to a user.

7. An archery shooting facility comprising:
- a target (64) with an interactive surface (66),
- a device for locating an impact according to any of claims 1 to 5, and
- at least one arrow (68) of which one end (70) intended to reach the interactive surface (66) of the target (64) is provided with a tip (72) for damping the impact.

8. The archery shooting facility according to claim 7, of which the target (64) comprises:
- a first plate (74), for example formed from straw or from dense foam, on one front face of which is displayed a marker of the target (64), and
- a second transparent protective plate (66) arranged against the front face of the first plate (74), this second transparent protective plate (66) comprising the interactive surface and having a visual marker allowing for a centring with respect to the marker of the target (64).

9. A method for locating an impact (P) against an interactive surface (10) able to propagate progressive mechanical waves from the impact (P), comprising the following steps:
- capturing (102), using at least three transducers (PT_{A}, PT_{B}, PT_{C}, PT_{D}) arranged and distributed against the interactive surface (10), the progressive mechanical waves propagating in the interactive surface (10) and transforming them into electrical signals, and
- locating (104, 106, 108) the impact (P) in the interactive surface (10), using an electronic central unit (12) connected to the transducers (PT_{A}, PT_{B}, PT_{C}, PT_{D}) in order to receive their electrical signals, by analysing (108) propagation time differences of progressive mechanical waves from the impact (P) to the transducers (PT_{A}, PT_{B}, PT_{C}, PT_{D}) on the basis of instants (t₂, t₂', t₂") of impact (P) detection identified in the electrical signals received,
**characterised in that** the locating of the impact (104, 106, 108) comprises the following steps:
- triggering (104) an impact detection from a first instant (ti) when at least one M-th derivative from at least one of the electrical signals received by the electronic central unit (12) exceeds a predetermined non-zero threshold value (Vₛ), where M is a positive integer or zero, and
- after triggering (104) the impact detection:
• determining (106), for each electrical signal received from each transducer (PT_{A}, PT_{B}, PT_{C}, PT_{D}), at least one second instant (t₂, t₂', t₂"), subsequent to the first instant (t₁), of the first zero crossing of at least one N-th derivative of this electrical signal, where N is a positive integer or zero, and
• identifying (106), for each electrical signal received from each transducer (PT_{A}, PT_{B}, PT_{C}, PT_{D}), at least one instant (t₂, t₂', t₂") of impact detection in this electrical signal from said at least one second determined instant (t₂, t₂', t₂").

10. A computer program that can be downloaded from a communication network and/or recorded on a support that can be read by a computer and/or executed by a processor (30), **characterised in that** it comprises instructions for the execution of the steps of a method for locating an impact according to claim 9, when said program is executed on a computer.
